## Europäisches Patentamt

## European Patent Office

## Office européen des brevets

(19)

(11) Publication number: **0 116 093**

**A1**

(12) # EUROPEAN PATENT APPLICATION

published in accordance with Art. 158(3) EPC

(21) Application number: 83902441.1

(22) Date of filing: 27.07.83

Data of the international application taken as a basis:

(86) International application number:
PCT/JP83/00242

(87) International publication number:
WO84/00618 (16.02.84 84/05)

(51) Int. Cl.³: **G 02 C 5/12**
**G 02 C 5/20**

(30) Priority: 31.07.82 JP 132986/82

(43) Date of publication of application:
22.08.84 Bulletin 84/34

(84) Designated Contracting States:
AT CH DE FR LI NL SE

(71) Applicant: NEGISHI, Tohru
4-27, Honcho 6 chome Iwatsuki-shi
Saitama 339(JP)

(72) Inventor: NEGISHi, Tohru
4-27, Honcho 6 chome Iwatsuki-shi
Saitama 339(JP)

(74) Representative: Madgwick, Paul Roland et al,
Ladas & Parry Isartorplatz 5
D-8000 München 2(DE)

(54) MULTIPLE FOCUS SPECTACLES FRAME.

(57) In a multiple focus spectacles frame in which a pair of frame levers (14) are mounted at a pair of lens frames (1) through bending mechanisms for bending elevationally to the frames (1) and a pair of nose contact pieces (9) are mounted at the frames (1) through elevationally moving mechanism for elevationally moving or rotating the pieces (9) to alter the relative heights of the frames (1) to the eye reference line; the angular displacement of the levers (14) to the frames (1) is transmitted to the elevationally moving mechanism for automatically elevationally moving or rotating the pieces (9) via a linear unit (1) passed at the upper and/or lower sides of the frames (1).

Fig. 4

Fig. 13

EP 0 116 093 A1

0116093

TITLE MODIFIED
see front page

MULTIFOCAL SPECTACLE FRME

Technical Field:

This invention relates to improvements in a multifocal spectacle frame of the type in which the spectacle frame can, by a simple operation, be moved vertically and also tilted to change the angle of inclination of the spectacle frame so that the spectacles can be used in an optically optimum condition and worn with confort whichever segment of a lens is used.

Background Art:

The applicant has developed a variety of multifocal spectacle frames of the type in which side pieces are pivoted up and down in a vertical plane and nose pieces moved up and down to move the spectacle lenses vertically and change the angle of inclination of the spectacle lenses, relative to the normal line of vision (referred to as the horizontal line of vision when looking into the distance) of the user. Applications have been filed on these multifocal spectacle frames (Japanese Patent Application Nos. 55-128629, 56-59000, 56-124803, Japanese Utility Model Application Nos. 56-118374, 56-138292 and International Application No. PCT/JP82/00025, etc.).

Since the spectacle lenses are moved vertically and also tilted to change their angle of inclination, these multifocal spectacle frames are highly effective in that the spectacles can be used in an optically optimum condition and worn with confort whichever segment of a lens is used. However, with these spectacle frames, two separate operations must be performed, namely an operation of extending the side pieces straight out or moving them up and down, and an operation of moving the nose pads up and down or of rotating the nose pads. Accordingly, the spectacle frames are disadvantageous in that an individual not accustomed to using them will find these operations difficult to perform. In particular, though the side pieces can be moved up and down with comparative ease, a drawback is that some difficulty is involved in operating the nose pads.

The present invention has as its object to provide a multifocal spectacle frame which eliminates the aforesaid shortcomings possessed by the multifocal spectacle frames disclosed by the foregoing applications of the present applicant, wherein the nose pads can be operated automatically when the side pieces are moved up and down, thereby vastly simplifying the operation of the spectacles.

Another object of the present invention is to provide a multifocal spectacle frame which, despite a very simple structure, is capable of being operated reliably and used for many years.

A further object of the present invention is to provide a multifocal spectacle frame in which vertical movement of the side pieces and movement of the nose pads can be operatively associated without detracting from the exterior design of the overall spectacle frame.

Disclosure of the Invention:

The present invention relates to a multifocal spectacle frame comprising a pair of rightside and leftside lens rims for mounting multifocal lenses, a bridge for interconnecting the leftside and rightside lens rims, a nose pad for supporting the inner side of each of the rightside and leftside lens rims on the sides of the nose, a support attached to the outer side of each of the rightside and leftside lens rims, a side piece attached to the support so as to be foldable upward and downward through a predetermined angle, a folding mechanism for attaching the side piece to the support so as to be foldable upward and downward through a predetermined angle, and a level adjusting mechanism for moving an abutting surface of the nose pad upward and downword in order to change the relative height of the lens rims with respect to the normal line of vision, the abutting surface being moved up and down by moving the nose pad vertically or by rotating the nose pad, the improvement comprising transmission means for transmitting the relative motion of the side piece, with respect to the support, to the level adjusting mechanism, whereby the relative position of the nose pad with respect to the lens rim is changed automatically.

Brief Description of the Drawings:

Fig. 1 is a perspective view illustrating a first embodiment of the present invention;

Fig. 2 is a perspective, exploded view of the principal part of the first embodiment;

Fig. 3 is a view for describing the operation of the first embodiment;

Fig. 4 is a perspective view illustrating a second embodiment;

Fig. 5 is a perspective, exploded view, partially cut away, of the principal part of the second embodiment;

Figs. 6 and 7 are views for describing the operation of the second embodiment;

Fig. 8 is a perspective view illustrating a third embodiment;

Fig. 9 is a perspective view of the principal part of the third embodiment;

Fig. 10 is a view for describing the operation of the third embodiment;

Fig. 11 presents perspective views of various modifications of the principal part of the third embodiment;

Fig. 12 is a perspective view of the principal part of a fourth embodiment;

Fig. 13 is a perspective view illustrating a fifth embodiment;

Fig. 14 is a perspective view of the principal part of a fifth embodiment;

Fig. 15 is a perspective view of the principal part of a sixth embodiment; and

Fig. 16 is a perspective view of the principal part of a seventh embodiment.

Best Mode for Carrying out the Invention:

The present invention will be described in detail hereinafter with reference to the accompanying drawings.

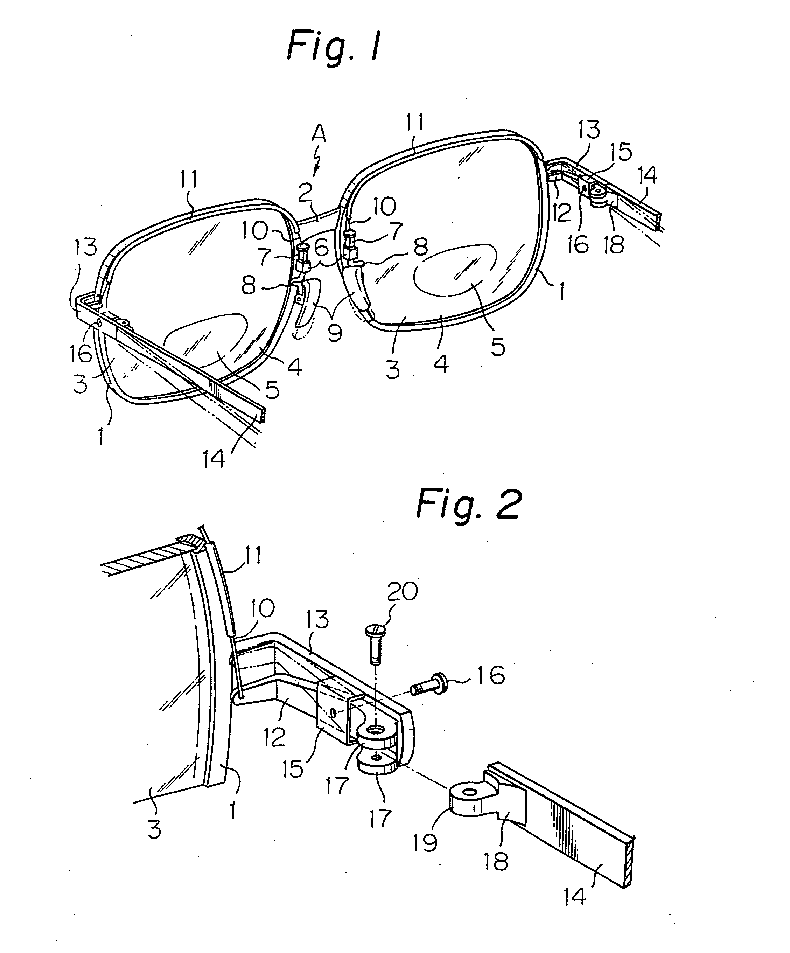

Fig. 1 is a perspective view illustrating a first embodiment in which the present invention is applied to bifocal spectacles. The character A designates the main body of the spectacle frame, which comprises a pair of leftside and rightside lens rims 1, 1, and a bridge 2 linking the leftside and rightside lens rims 1, 1 at the portions slightly above center. Fitted into the lens rims 1, 1 are respective bifocal lenses 3, 3 in which close-up lens segments 5, 5 are formed integral with distance lens segments 4, 4 at the lower part thereof. Conventional bifocal spectacles are substantially the same in construction.

Affixed to the inner sides of the lens rims 1, 1 in confronting relation are columnar mounting legs 6, 6 each having a vertically extending through-hole. In the illustrated embodiment, the vertically extending through-holes have a rectangular cross section. These rectangular holes receive respective slide rods 7, 7 of rectangular columnar shape which are capable of being moved up and down within the holes. Nose pads 9, 9 are attached to the lower ends of the slide rods 7, 7 via bent adjusting rods 8, 8. Wire-like bodies 10, 10 are attached at one end thereof to the upper ends of the slide rods 7, 7.

Slender tubes 11, 11 are attached to the upper sides of the lens rims 1, 1 and extend along the rims. The wire-like bodies 10, 10, which are passed through the tubes 11, 11, are connected at one end to the upper end of the respective slide rods 7, 7, and at the other end to the distal end of respective rotating bodies 12, 12.

The front ends of supports 13, 13 are rigidly attached to the outer sides of the lens rims 1, 1, and side pieces 14, 14 are so attached to the supports 13, 13 as to be capable of pivotal movement both horizontally and vertically. The portions composed of the supports 13, 13 and side pieces 14, 14 will be described with reference to the perspective, exploded view of Fig. 2. The rear edge portion of the support 13 is formed into an arcuate shape. A support piece 15 having a substantially C-shaped cross section is secured near the rear end of the support 13 on the inner side thereof. Holes in positional alignment are drilled through the support 13 and support piece 15, and the hole on the side of the support 15 has female threads. The rotating body 12, having a hole which will be in positional alignment with the holes in the support 13 and support piece 15, is fitted into the support piece 15, and a screw 16 is passed through these holes and screwed into the hole of the support piece 15, whereby the rotating body 12 is capable of being rotated about the screw 16. The rear end of the rotating body 12 is formed to include two vertically spaced rings 17, 17, one above the other. The hole in the lower ring 17 has female threads. The other end of the wire-like body 10 is affixed to the front end of the rotating body 12, as mentioned above. A swivelling joint 18 having a ring 19 at its distal end is affixed near the front end of the side piece 14 on the inner side thereof. The edge at the front end of the side piece 14 is formed into an arcuate concave to match the arcuate shape of the rear edge of the support 13. The ring 19 of the swivelling joint 18 is inserted between the rings 17, 17 of the rotating body 12, in which state a screw 20 is passed through the ring 19 from the hole in the upper ring 17 and is screwed into the hole in the lower ring 17. Thus, the side piece 14 is so attached as to be foldable inwardly about the fulcrum of the screw 20. Also, the arrangement is such that, when the side piece 14 is swung outwardly in the horizontal direction to be fully extended, the front edge of the side piece 14 abuts against the rear edge of the support 13 to bring the side piece to a stop.

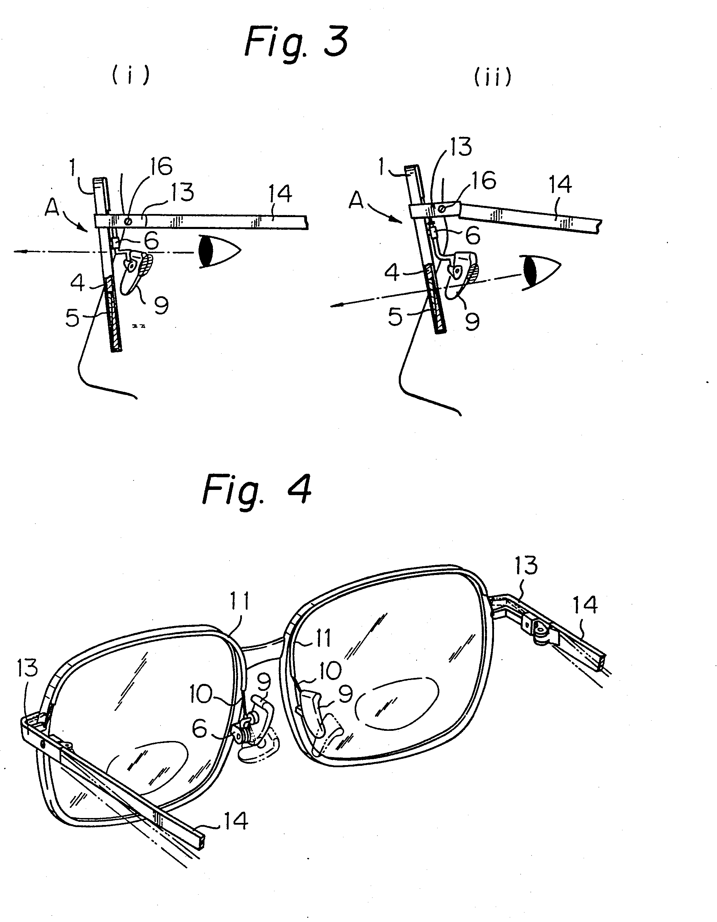

Fig. 1 shows the side pieces 14, 14 extended straight out by being pivoted in the vertical direction, and shows the nose pads 9, 9 in their upper position. When worn in this state [Fig. 3(i)], the main body A of the spectacle frames is supported in a lowered attitude relative to the front of the wearer's face, and the long distance lens segments 4, 4 are brought substantially to the center of the normal line of vision. This is the state in which the spectacles are worn ordinarily for seeing into the distance. The normal line of vision for distant viewing and the plane of the lenses meet at substantially right angles, this being the optimum optical condition for such viewing. In this state of use, the close-up lens segments 5, 5 are situated a good deal below the normal line of vision for distant viewing and are not an impedement to such viewing. Therefore, this eliminates such drawbacks as the boundary between the long-distance lens segments 4, 4 and close-up lens segments 5, 5 coming into view, as well as a blurring at one's feet, thus enabling the spectacles to be worn with comfort.

Described next will be a case where an object is to be viewed up close, as when reading or writing. Here the main body A is grasped and tilted forward, causing the side pieces 14, 14 to fold, relative to the supports 13, 13, about the fulcrum of the scres 16, 16. At such time the rotating bodies 12, 12 are rotated so that the forward ends thereof move upwardly relative to the supports 13, 13. When this occurs, the wire-like bodies 10, 10 are moved interiorly of the tubes 11, 11 toward the bridge 2, whereby the slide rods 7, 7 and nose pads 9, 9 attached thereto are lowered relative to the lens rim 1. This pushing down of the slide rods 7, 7 is performed by the wire-like body 10 itself when the wire-like body is a incompressible wire member such as steel, or with the aid of a return spring, not shown, provided at a prescribed location. At this time, the main body A is raised relative to the wearer's face and is supported on the nose in a forwardly tilted state. The downward pivoting of the side pieces 14, 14 with respect to the main body A not only tilts the main body A forwardly, but also brings the close-up lens segments 5, 5 slightly nearer to the eyes, and lifts the main body A relative to the wearer's face. Therefore, the combined effect of the downward pivoting of the side pieces 14, 14 relative to the main body A and the support of the nose pads 9, 9 at the lower position causes the main body A to be supported on the nose in a raised attitude.

A small shaded area is shown in Fig. 3 to represent the area where the face of the nose pad 9 abuts against the wearer's nose. The arrangement is such that the faces of the nose pads 9, 9 abut against substantially the same points on the nose when the main body A is supported at both the upper and lower positions.

When the main body A is supported in the slightly forwardly tilted and lifted state, as shown in Fig. 3(i), the close-up lens segments 5, 5 affixed thereto also are tilted slightly forward and raised to bring them close to the center of the field of vision and close to the eyes. The close-up lens segments 5, 5 are used when viewing an object up close, at which time the line of vision is directed downwardly. Owing to the slight forward tilt of the main body A, therefore, the lenses 3, 3 are inclined to form approximate right angles with the line of vision. Also, since the close-up lens segments 5, 5 are brought close to the center of the field of vision and are substantially perpendicular to the line of vision, eye strain is minimized. The angle of inclination of the spectacles is medically ideal, being 5 to 10° when the long-distance lens segments are used, an about 20° when the close-up lens segmenets are used. Further, since the close-up lens segments 5, 5 are brought close to the eyes, an additional advantage is that the field of vision can be widened.

The transition from the attitude of Fig. 3(ii) to that of Fig. 3(i) is accomplished by extending the side pieces 14, 14 straight out. Specifically, the side pieces 14, 14 are extended fully relative to the supports 13, 13 while the lower part of the main body A is pressed forward, causing the rotating bodies 12, 12 to rotate so that the ends thereof are moved downwardly relative to the supports 13, 13, thereby pulling down the outer ends of the wire-like bodies 10, 10. In consequence, the slide rods 7, 7 connected to the other ends of the wire-like bodies 10, 10, and the nose pads 9, 9 attached to the slide rods, are pulled in the upward direction.

In the foregoing first embodiment, the nose pads 9, 9 are adapted to slide up and down. In the second embodiment shown in Figs. 4 through 7, the nose pads 9, 9 are adapted to be move up and down by being so swivelled. Specifically, the mounting legs 6, 6 in the second embodiment have an overall plate shape and an arcuate distal end. The nose pads 9, 9 are attached to these arcuate front ends in such a manner that they can be swivelled up and down.

0116093

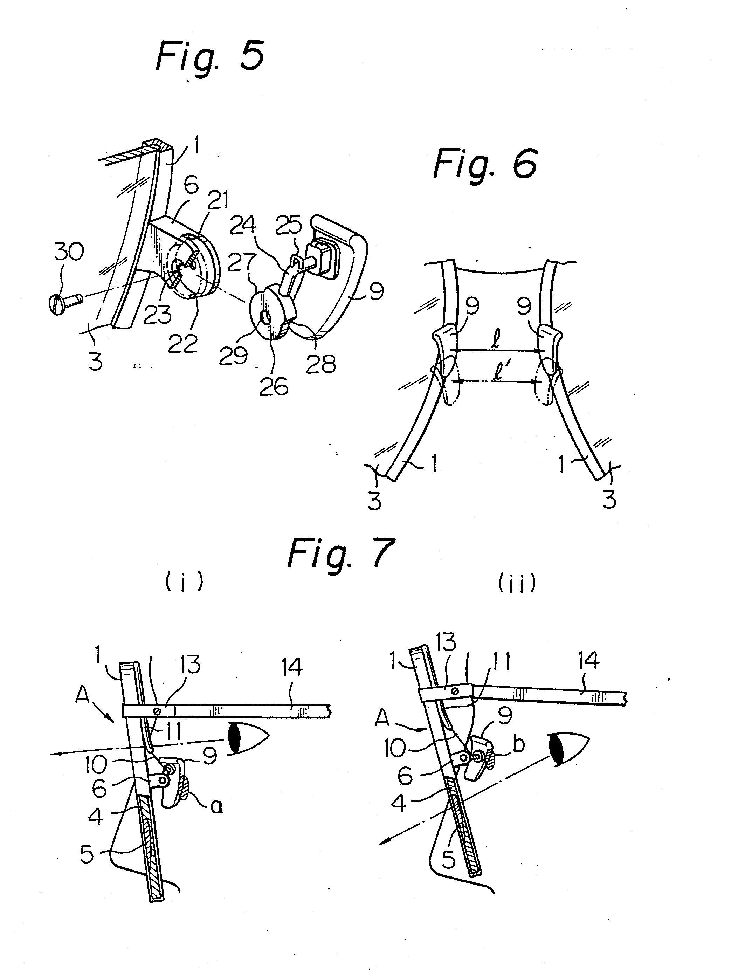

The mechanism through which the nose pads 9, 9 are attached will be described in conjunction with Fig. 5. Fig. 5 is a perspective, exploded view, partially cut away, of the portion where the mounting leg 6 and nose pads 9 are attached. The mounting leg 6 is formed at its distal end with a semicircular slot, and with a slot, also of semicircular configuration but of smaller radius, cut in the mounting leg opposite to the other semicircular slot. Two stepped portions 21 and 22 are formed between the two slots. The mounting leg 6 is provided with a horizontally extending hole 23 for receiving a screw passed therethrough. On the backside of the nose pad 9 there is attached a pad arm 24 of substantially L-shape. The pad arm 24 has a small ring 25 attached to its upper surface, and a swivel 26 attached to end portion. The swivel 26 has the configuration of a disk with a sector-shaped portion integrally attached to its outer periphery, and is sized to be closely encased in the slots of the mounting leg 6. Stepped portions 27 and 28 are defined on the front and back sides of the sector-shaped portion, and the central portion of the disk is provided with a hole 29 for receiving the screw which will be passed therethrough.

The swivel 26 is fit into the slots of the mounting leg 6 and the hole 23 in the mounting leg 6 is aligned with the hole 29 in the swivel 26, after which the screw 30 is inserted and tightened by screwing to attach the nose pad 9 to the mounting leg 6 via the pad arm 24 in such a manner that the nose pad can be swivelled (shown in Fig. 4). The inner ends of the wire-like bodies 10, 10 are connected to the rings 25, 25 of the pad arms 24, 24.

With the side pieces 14, 14 extended straight out with respect to the support 13, the wire-like bodies 10, 10 exert an upward pulling force upon the nose pads 9, 9. At this time, the stepped portions 27, 27 of the swivel 26, 26 abut against the stepped portions 21, 21 of the mounting legs 6, 6. On the other hand, with the side pieces 14, 14 in the downwardly pivoted state, the nose pads 9, 9 are pushed downward, so that the stepped portions 28, 28 of the swivels 26, 26 abut against the stepped portions 22, 22 of the mounting legs 6, 6.  As shown in Fig. 6, the arrangement is such that the spacing $\ell$ between the righthand and lefthand nose pads 9, 9 when they are swivelled to the upward position is approximately equal to the spacing $\ell'$ when they are swivelled to the downward position.

The second embodiment is used in the manner shown in Fig. 7.  First, when the long-distance lens segments 4, 4 are used, the side pieces 14, 14 are extended straight out with respect to the supports 13, 13, whereby the nose pads 9, 9 are swivelled upward.  In this condition, the main body A is supported at a low position on the wearer's nose.

Then, when the close-up lens segments 5, 5 are used, the main body A is grasped by one's hand and is merely tilted forwardly while the spectacles remain being worn. When this is done, the side pieces 14, 14 fold relative to the supports 13, 13 and, at the same time, the nose pads 9, 9 are swivelled downward, as shown in Fig. 7(ii).  Abutting areas b, b, where the nose pads 9, 9 contact the nose when the spectables are worn in this manner, are slightly above abutting areas a, a shown in Fig. 7(i).  Specifically, as shown in Fig. 7(ii), the distance between ear and nose pad is reduced owing to the folding of the side pieces 14, 14 with respect to the supports 13, 13, and the nose pads 9, 9 are swivelled to the lower position, whereby the main body A is supported in a lifted condition.  Further, since the main body A is supported in a forwardly tilted attitude, the close-up lens segments 5, 5 affixed thereto also are tilted forwardly and raised.  This brings the close-up lens segments close to the center of the line of vision and close to the eyes.

Regulation of the vertical distance travelled by the main body A is achieved by adjusting the bend angle of the pad arms 24, 24 to take account of the difference between individuals, adopting a setting such that the spacing between the nose pads 9, 9 in the upwardly and downwardly rotated positions will differ.

Next, a third embodiment of the present invention will

0116093

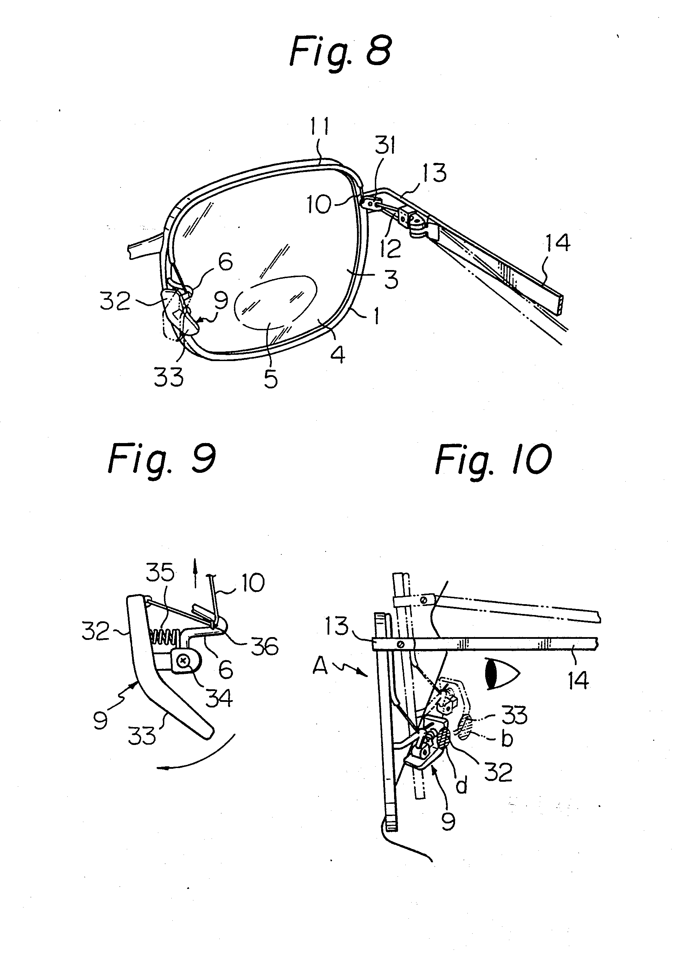

be described in conjunction with Figs. 8 through 10. In the third embodiment, rocking pieces 31, 31 are attached for rocking motion to the inner sides of the supports 13, 13 near the forward ends thereof by means of respective pins. The outer end of each rocking piece 31, 31 is provided with a drilled hole into which the tip of the respective rotating body 12, 12, formed to have a slender configuration, is inserted. The outer ends of the wire-like bodies 10, 10 are attached to the inner sides of the rocking pieces 31, 31.

The nose pad 9, which is bent at a point along its length into a slightly V-shaped configuration, is composed of an upwardly situated upper abutting surface 32, and a downwardly situated lower abutting surface 33. The nose pad 9 is rotatably attached to the distal end of the mounting leg 6 by a pin 34, and is provided with a compression spring 35 on the side of its upper abutting surface 32. A ring 36 is attached to the mounting leg 6. The wire-like body 10 is passed through the ring 6 and extended and has its inner end connected to the upper end of the nose pad 9.

The operation of the third embodiment is as shown in Fig. 10. When the spectacles are worn with the side pieces 14, 14 extended straight out with respect to the supports 13, 13, the upper abutting surfaces 32, 32 of the nose pads 9, 9 contact the abutting surfaces a, a of the wearer's nose, with the result that the main body A is supported in a lowered attitude.

When the main body A is then tilted forward, the side pieces 14, 14 bend relative to the supports 13, 13, thereby rotating the rotating bodies 12, 12. These cause the rocking pieces 31, 31 to rock and pull the outer ends of the wire-like bodies 10, 10 in a downward direction. At such time, the inner ends of the wire-like bodies 10, 10 are pulled upward, so that the lower abutting surfaces 33, 33 of the nose pads 9, 9 are pushed inward. This causes compression of the springs 35, 35. When the spectacles are worn in this state, the lower abutting surfaces 33, 33 of the nose pads 9, 9 contact the abutting surfaces b, b of the wearer's nose, so that the main body is supported on the nose in an uplifted condition.

As will be apparent from the above, the nose pad 9 is bent at a point along its length into a slightly V-shaped configuration, and the surface thereof is formed to include an upwardly situated upper abutting surface 32 and a downwardly situated lower abutting surface 33. The object of such a surface is, first, to make it possible to support the main body A in two different conditions, namely in an uplifted condition and a lowered condition, and second, to compensate for a change in the angle of contact with the contact surfaces on the sides of the wearer's nose by rotation of the nose pad 9 when the main body A is moved up and down.

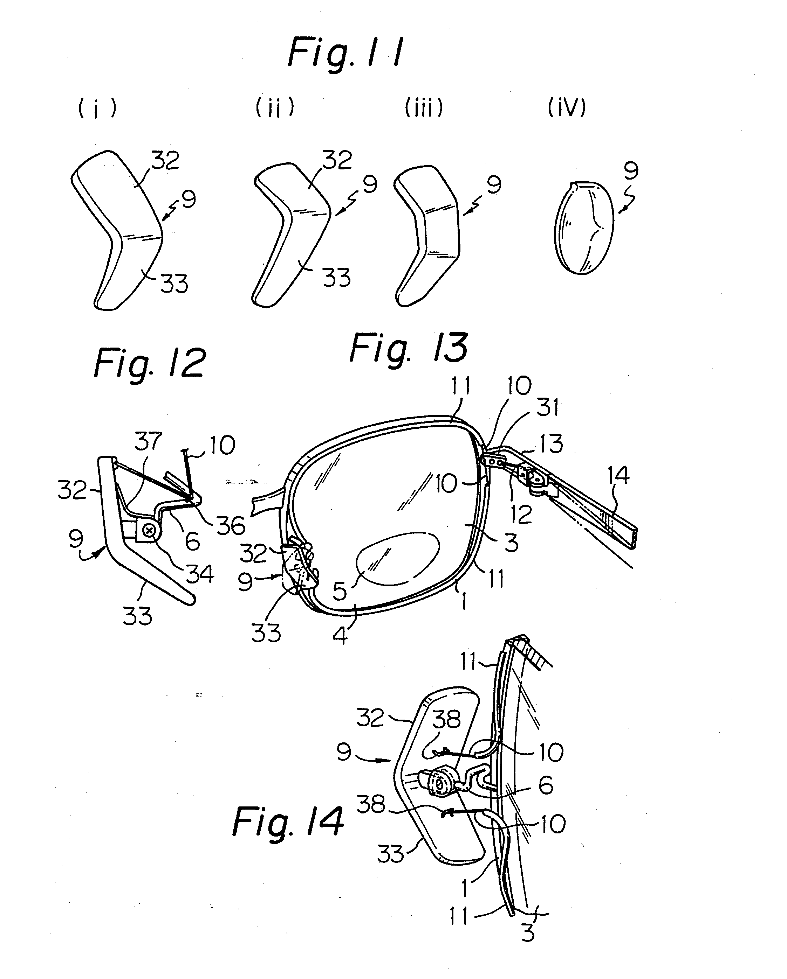

According to the superficial shape of the nose pad 9 in the third embodiment illustrated above, the upper abutting surface 32 and lower abutting surface 33 are of approximately the same width. However, as shown in Fig. 11(i), the upper abutting surface 32 can be made wider than the lower abutting surface 33, or the opposite arrangement can be adopted, as shown in Fig. 11(ii). Fig. 11(iii) illustrates a nose pad used in a trifocal spectacle frame, the nose pad having three abutting surfaces. Fig. 11(iv) illustrates a nose pad used in a spectacle frame for three of more foci, the nose pad having a substantially spherical surface. In the views of Fig. 11, only the leftside nose pad, as viewed from the wearer, has been depicted. The rightside nose pad is symmetrically opposite in configuration to the leftside one.

Next, a fourth embodiment of the present invention will be described with reference to Fig. 12. Whereas the compression spring 35 was used in the third embodiment to urge the side of the upper abutting surface 32 of the nose pad 9, in this fourth embodiment the compression spring 35 is replaced by a leaf spring 37.

A fifth embodiment of the present invention will now be described in conjunction with Figs. 13 and 14. The fifth embodiment is a modification of the third embodiment, and has two tubes 11, one disposed along the upper side and the other disposed along the lower side of the lens rims 1, 1. The wire-like bodies 10, 10 are passed through the interior of each tube 11. The outer end of each of the wire-like bodies 10, 10 of each pair is connected to the tip of the corresponding rocking bodies 31, 31 rockably attached to the supports 13, 13. As shown in Fig. 14, the inner end of each of the wire-like bodies 10, 10 of each pair is connected to corresponding upper and lower rings 38, 38, which are provided on the back surface of the nose pads 9, 9. When the side pieces 14, 14 are extended straight out or pivoted downwardly with respect to the supports, one of the upper and lower wire-like bodies 10, 10 pulls and rocks the nose pads 9, 9 in a predetermined direction. This embodiment is advantageous in that the prescribed motion can be transmitted with good reliability even if the wire-like bodies 10, 10 consist of a soft material.

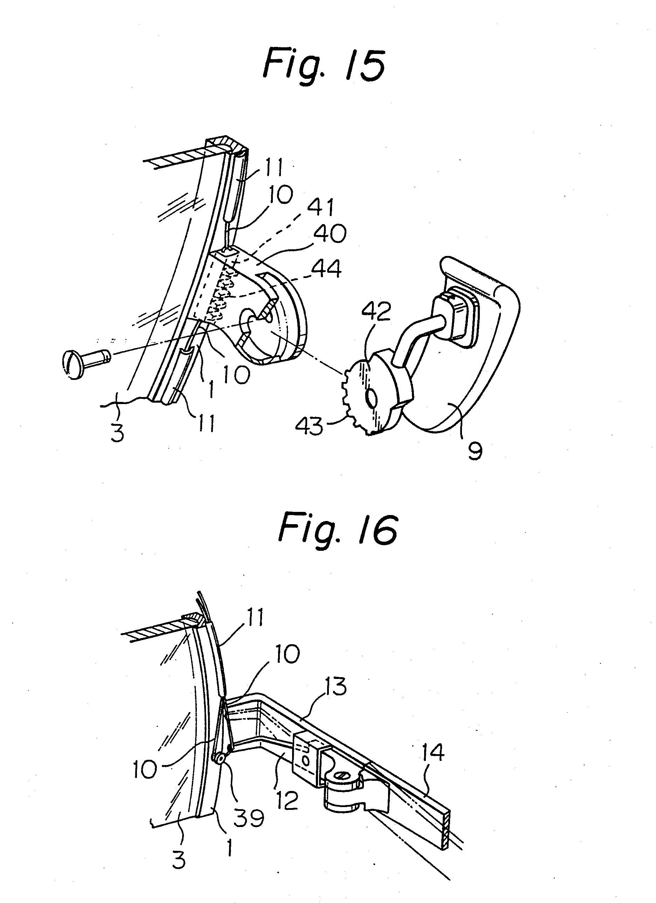

Next, a sixth embodiment of the present invention will be described with reference to Fig. 15. The sixth embodiment is a modification of the fifth embodiment depicted in Figs. 13 and 14. The inner ends of the wire-like bodies 10, 10 extending through the tubes 11, which are provided along the upper and lower sides of the lens rims 1, 1, are connected to the upper and lower ends, respectively, of a slide member 41 accommodated interiorly of a mounting leg 40 so as to be slidable up and down. Formed on the slide member 41 is a rack 44 meshing with a pinion 43 of a swivel 42. In other aspects the construction of the mounting leg 40 and swivel 42 is similar to that of the mounting leg 6 and swivel 26 in Fig. 5. In order to simplify the drawings, the portions corresponding to these similar structural elements are not designated by reference numerals.

As with the fifth embodiment, when the side pieces 14, 14 are extended straight out or pivoted downwardly with respect to the supports 13, 13, one of the upper and lower wire-like bodies 10, 10 slides the slide piece 41 up or down within the mounting leg 40. This upward and downward movement of the slide piece 41 is converted into swivelling movement of the swivel 42 and nose pad 9 attached thereto, via the rack 44 of the slide piece 41 and the pinion 43 of the swivel 42. The advantage of this embodiment is that a small change in the angle of the side piece 14 is converted reliably into a large change in the angle of the swivel 42 and nose pad attached thereto.

Many other mechanisms in addition to that described above can be conceived for converting a small angular change of the side pieces 14, 14 into a large angular change of the swivels and nose pads attached thereto. For example, in the rotary-type mechanism for moving the nose pads up and down as shown in Fig. 5, a mechanism is available wherein the mounting legs 6, 6 are attached to the inner sides of the respective lens rims 1, 1 via slide members attached to the lens rims 1, 1 so as to be slidable up and down, and the inner ends of the wire-like bodies 10, 10 extending through the tubes 11, which are provided along the upper and lower sides of the lens rims 1, 1, are attached to the swivel 26 or to the nose pad arm 24 affixed to the swivel 26. This mechanism is advantageous in that a portion of the upward and downward movement of the nose pads 9, 9 is born by the slide members attached to the inner sides of the lens rims 1, 1, the amount of upward and downward movement being enlarged while fully compensating for the change in the angle of contact which the nose pads make with the contact surfaces on the sides of the wearer's nose.

A seventh embodiment of the present invention will now be described in conjunction with Fig. 16. In the seventh embodiment, a single tube 11 is provided for each lens rim 1, and two of the wire-like bodies 10 are passed through each tube. The outer end of each of these wire-like bodies 10, 10 is attached to the tip of the rotating body 12. One of the wire-like bodies 10 is passed through tube 11 together with the other wire-like body 10 after being looped around a roller 39 attached to the lens rim 1. With this arrangement, one of the wire-like bodies 10 will be pulled regardless of the direction in which the rotating body 12 is rotated, providing the same effects as the fifth embodiment.

In the foregoing embodiments, the tube 11 is used for receiving the wire-like body 10. However, use of the tube 11 is not strictly essential. For example, the lens rim 1 can be made hollow and the wire-like body 10 passed through the hollow portion, or the lens rim 1 can be provided with a groove and the wire-like body 10 laid within the groove. Further, one variety of folding mechanism has been disclosed wherein the side pieces 14 are extended straight out and pivoted up and down with respect to the supports 13, 13. However, options other than this folding mechanism can be adopted. Further, various arrangements other than those illustrated can be adopted for the mechanisms that slide or rotate the nose pad 9. It should be understood that, although the above description has been made in reference to bifocal spectacles, this invention is also applicable to other types of spectacles having three or more foci.

In a multifocal spectacle frame constructed in accordance with the present invention as described in detail hereinabove, the side piece 14, which is provided on the outer side of each of the lens rims 1, is suitably tilted with respect to the lens rim 1 via a folding mechanism for extending the side piece 14 straight out, or for rotating the side piece up and down, with respect to the support 13. When such tilting is performed, the associated motion is transmitted to the nose pad 9 via the wire-like body 10 so that the nose pad 9 responds automatically. Therefore, with the multifocal spectacle frame according to the present invention, merely selecting a suitable folding angle for the side piece 14 relative to the support 13 enables a desired lens segment, from among those in the multifocal lens fitted in the lens rim 1, to be brought to a level for easiest use. In addition, since the lends segment used is employed at an optically ideal angle, eye strain can be prevented.

Claims:

1. In a multifocal spectacle frame comprising a pair of rightside and leftside lens rims for mounting multifocal lenses, a bridge for interconnecting said leftside and rightside lens rims, a nose pad for supporting the inner side of each of said rightside and leftside lens rims on the sides of the nose, a support attached to the outer side of each of said rightside and leftside lens rims, a side piece attached to said support so as to be foldable upward and downward through a predetermined angle, a folding mechanism for attaching said side piece to said support so as to be foldable upward and downward through a predetermined angle, and a level adjusting mechanism for moving an abutting sur-- face of said nose pad upward and downward in order to change the relative height of said lens rims with respect to the normal line of vision,

the improvement comprising transmission means for transmitting the relative motion of said side piece, with respect to said support, to said level adjusting mechanism, whereby the relative position of said nose pad with respect to said lens rim is changed automatically.

2. The multifocal spectacle frame according to Claim 1, wherein said transmission means is a wire-like body slidably attached along said lens rim.

3. The multifocal spectacle frame according to Claim 2, wherein said wire-like body is attached solely to the upper side of said lens rim.

4. The multifocal spectacle frame according to Claim 2, wherein said wire-like body is attached solely to the lower side of said lens rim.

5. The multifocal spectacle frame according to Claim 2, wherein said wire-like body is attached to the upper side and lower side of said lens rim.

6. The multifocal spectacle frame according to any one of Claims 3 through 5, wherein said wire-like body is passed through the interior of a tube provided along the periphery of said lens rim.

7. The multifocal spectacle frame according to any one of Claims 3 through 5, wherein said wire-like body is passed through a hole formed internally of said lens rim.

8. The multifocal spectacle frame according to any one of Claims 3 through 5, wherein said wire-like body is passed through a groove formed in the periphery of said lens rim.

9. The multifocal spectacle frame according to Claim 3 or 4, wherein said folding mechanism comprises a support piece secured near a rear end of said support on an inner side thereof, and a rotating body pivoted on said support and on said support piece so as to be capable of rotating upward and downward through a predetermined angle, an outer end portion of said wire-like body being attached to one end of said rotating body.

10. The multifocal spectacle frame according to Claim 9, wherein said level adjusting mechanism comprises a mounting leg affixed to the inner side of each of said lens rims and having a vertically extending through-hole, and a slide rod slidably accommodated within said through-hole for supporting said nose pad, an inner end portion of said wire-like body being connected to an end portion of said slide rod.

11. The multifocal spectacle frame according to Claim 9, wherein said level adjusting mechanism comprises a mounting leg affixed to the inner side of each of said lens rims and having a slot, a swivel for supporting said nose pad positioned within the slot of said mounting leg and pivoted on said mounting leg so as to be capable of rotating through a predetermined angle, a nose pad arm for interconnecting said swivel and said nose pad, and a wire-like body attaching portion provided on said nose pad arm, an inner end portion of said wire-like body being connected to the wire-like body attaching portion of said nose pad arm.

12. The multifocal spectacle frame according to Claim 9, wherein said level adjusting mechanism comprises a mounting leg having one end thereof affixed to the inner side of each of said lens rims and having said nose pad pivoted on the other end thereof so as to be capable of rotating, and a wire-like body attaching portion affixed to said mounting leg, said wire-like body being passed through the wire-like body attaching portion of said mounting leg and connected to a back side of said nose pad.

13. The multifocal spectacle frame according to any one of Claims 10 through 12, wherein said level adjusting mechanism further includes a return spring, whereby said nose pad is returned to an original position when said side piece is folded upward and downward to relieve tension applied to said wire-like body.

14. The multifocal spectacle frame according to Claim 5, wherein said folding mechanism comprises a support piece secured near a rear end of said support on an inner side thereof, and a rotating body pivoted on said support and on said support piece so as to be capable of rotating upward and downward through a predetermined angle, wherein said wire-like body is passed along the upper side and the lower side of said lens rim, the outer end portion of each of said wire-like bodies being attached to a portion of said rotating body.

15. The multifocal spectacle frame according to Claim 14, wherein said levelling mechanism comprises a mounting leg having one end thereof affixed to the inner side of each of said lens rims and having said nose pad pivoted on the other end thereof so as to be capable of rotating, the inner end portion of each of the wire-like bodies passed along the upper side and lower side of said lens rim being connected to a back side of the nose pad, which is pivoted on said support leg, on either side of the axis of rotation thereof.

16. The multifocal spectacle frame according to Claim 14, wherein said levelling mechanism comprises a mounting leg affixed to the inner side of each of said lens rims and having a slot, a slide piece having a rack adapted for location within said slot, said slide piece being vertically slidably accommodated within said mounting leg, a swivel having a pinion which meshes with the rack of said slide piece and for supporting said nose pad, said swivel being pivoted on said mounting leg within said slot so as to be capable of rotating through a predetermined angle, and a nose pad arm for interconnecting said swivel and said nose

0116093

pad, the inner end of each of the wire-like bodies passed along the upper side and lower side of said lens rim being connected to an upper end and lower end, respectively, of the slide piece slidably accommodated within said mounting leg.

17. The multifocal spectacle frame according to Claim 14, wherein said levelling mechanism comprises a slide member vertically slidable attached to the inner side of each of said lens rims, a mounting leg affixed to said slide member and having a slot, a swivel for supporting said nose pad positioned within the slot of said mounting leg and pivoted on said mounting leg so as to be capable of rotating through a predetermined angle, a nose pad arm for interconnecting said swivel and said nose pad, and a wire-like body attaching portion affixed to said nose pad arm, the inner end portion of each of the wire-like bodies passed along the upper side and lower side of said lens rim being connected to the wire-like body attaching portion of said nose pad leg.

18. The multifocal spectacle frame according to Claim 3 or Claim 4, wherein two of said wire-like bodies are provided for each of said lens rims, and said folding mechanism comprises a support piece secured near a rear end of said support on an inner side thereof, and a rotatin body pivoted on said support and on said support piece so as to be capable of rotating upward and downward through a predetermined angle, an outer end portion of one of said wire-like bodies being attached directly to one end of said rotating body, and an outer end portion of the other of said wire-like bodies is attached to one end of said rotating body via an inverting member secured to said lens rim.

0116093

## Fig. 1

## Fig. 2

## Fig. 3

( i )

( ii )

## Fig. 4

## Fig. 5

## Fig. 6

## Fig. 7

( i )

(ii)

*Fig. 8*

*Fig. 9*

*Fig. 10*

Fig. 11

(i)      (ii)      (iii)      (IV)

Fig. 12      Fig. 13

Fig. 14

0116093

## Fig. 15

## Fig. 16

# INTERNATIONAL SEARCH REPORT

0116093

International Application No. PCT/JP83/00242

## I. CLASSIFICATION OF SUBJECT MATTER (if several classification symbols apply, indicate all) ³

According to International Patent Classification (IPC) or to both National Classification and IPC

Int. Cl.³ G02C 5/12, G02C 5/20

## II. FIELDS SEARCHED

### Minimum Documentation Searched ⁴

| Classification System | Classification Symbols |
|---|---|
| I P C | G02C 5/12, G02C 5/20, G02C 5/22, G02C 7/08 |

| | Documentation Searched other than Minimum Documentation to the Extent that such Documents are Included in the Fields Searched ⁵ |
|---|---|
| | Jitsuyo Shinan Koho 1926 - 1983 September |
| | Kokai Jitsuyo Shinan Koho 1971 - 1983 September |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| A | JP,U, 57-98425 (Negishi Tohru) 17. June. 1982, (17. 06. 82) | 1 - 18 |
| A | JP,U, 57-30725 (Negishi Tohru) 18. February, 1982, (18. 02. 82) | 1 - 18 |
| A | JP,A, 56-4118 (Amberto Forcini) 17. January. 1981, (17. 01. 81) | 1 - 18 |
| A | JP,A, 57-53725 (Negishi Tohru) 30. March. 1982, (30. 03. 82) | 1 - 18 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| October 12, 1983 (12. 10. 83) | October 24, 1983 (24. 10. 83) |

| International Searching Authority ¹ | Signature of Authorized Officer ²⁰ |
|---|---|
| Japanese Patent Office | |

Form PCT/ISA/210 (second sheet) (October 1981)